(19) Europäisches Patentamt
European Patent Office
Office européen des brevets

(11) **EP 3 940 641 A1**

(12) **EUROPEAN PATENT APPLICATION**
published in accordance with Art. 153(4) EPC

(43) Date of publication:
**19.01.2022 Bulletin 2022/03**

(21) Application number: **20770825.6**

(22) Date of filing: **10.03.2020**

(51) International Patent Classification (IPC):
***G06T 7/55*** (2017.01)

(52) Cooperative Patent Classification (CPC):
**G06K 9/00805; G06K 9/6271; G06N 3/04;
G06T 7/593;** G06T 2207/20084; G06T 2207/30196;
G06T 2207/30252

(86) International application number:
**PCT/CN2020/078564**

(87) International publication number:
**WO 2020/182117 (17.09.2020 Gazette 2020/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.03.2019 CN 201910186202**

(71) Applicant: **TENCENT TECHNOLOGY (SHENZHEN)
COMPANY LIMITED
Shenzhen, Guangdong 518057, (CN)**

(72) Inventor: **JIE, Zequn
Shenzhen, Guangdong 518057 (CN)**

(74) Representative: **Gunzelmann, Rainer
Wuesthoff & Wuesthoff
Patentanwälte PartG mbB
Schweigerstraße 2
81541 München (DE)**

(54) **METHOD, APPARATUS, AND DEVICE FOR OBTAINING DISPARITY MAP, CONTROL SYSTEM, AND STORAGE MEDIUM**

(57) A method, apparatus, and device for obtaining a disparity map, a control system, and a storage medium, relating to the technical field of image processing. The method comprises: respectively performing, layer by layer, feature extraction on a left eye image and a right eye image of a photographed object by means of M cascaded feature extraction layers, to obtain a left eye feature map set and a right eye feature map set of each layer (601), wherein M is a positive integer greater than or equal to 2; constructing an initial disparity map on the basis of the left eye feature map set and the right eye feature map set extracted by the Mth feature extraction layer (602); and starting from the (M-1)th layer, sequentially performing iterative updating on the disparity map by means of the left eye feature map set and the right eye feature map set extracted by each feature extraction layer until a final disparity map is obtained on the basis of the disparity map iteratively updated by the first layer (603).

Perform feature extraction on a left-view image and a right-view image of a photographed object layer by layer through M cascaded feature extraction layers, to obtain a left-view feature map set and a right-view feature map set of each layer — 601

Construct an initial disparity map based on the left-view feature map set and the right-view feature map set extracted by an $M^{th}$ feature extraction layer — 602

Iteratively refine, starting from an $(M-1)^{th}$ layer, a disparity map through the left-view feature map set and the right-view feature map set extracted by each feature extraction layer in sequence until a final disparity map is obtained based on an iteratively refined disparity map of a first layer — 603

Obtain a depth map based on the final disparity map, a distance between cameras that respectively capture the left-view image and the right-view image and focal lengths of the cameras — 604

FIG. 6B

## Description

This application claims priority to Chinese Patent Application No. 201910186202.2 filed with the China National Intellectual Property Administration on March 12, 2019 and entitled "METHOD, APPARATUS, AND DEVICE FOR OBTAINING DISPARITY MAP, AND CONTROL SYSTEM", which is incorporated herein by reference in its entirety.

FIELD OF THE TECHNOLOGY

The present disclosure relates to the technical field of image processing, and in particular, to a disparity map acquisition method and apparatus, a device, a control system and a storage medium.

BACKGROUND OF THE DISCLOSURE

Binocular stereo vision is a branch of Artificial Intelligence (AI). The binocular stereo vision is a method for acquiring three-dimensional geometric information of objects from multiple images based on the principle of disparity to simulate the visual perception of human eyes, and is an important form of machine vision. In a binocular stereo vision system, a binocular camera is used to obtain two images of a measured object at different angles, or a monocular camera is used to capture two images of the measured object from different angles, i.e., a left-view image and a right-view image, and the three-dimensional geometric information of the object is recovered based on the principle of disparity to reconstruct a three-dimensional contour and position of the object. The binocular stereo vision technology has broad application prospects in the field of machine vision. Generally, disparity prediction is carried out based on images, and thus the result of the disparity prediction is generally a disparity map. Each pixel point in the disparity map represents the disparity between pixel points at a corresponding position in the original image. In practical scenarios, the disparity value is negatively correlated with the depth. In other words, a large disparity value indicates that the object in the captured image is close to the camera, and a small disparity value indicates that the object in the captured image is far away from the camera. Therefore, the three-dimensional geometric information of the object can be recovered according to the distance, and thus the depth can be calculated through the disparity value.

SUMMARY

There are provided a disparity map acquisition method and apparatus, a device, a control system and a storage medium according to embodiments of the present disclosure, to improve the accuracy of disparity prediction.

According to an aspect, a disparity map acquisition method is provided. The method is executed by a computer device. The method includes:

performing feature extraction on a left-view image and a right-view image of a captured object layer by layer through M cascaded feature extraction layers, to obtain a left-view feature map set and a right-view feature map set of each layer, where M is a positive integer greater than or equal to 2;

constructing an initial disparity map based on the left-view feature map set and the right-view feature map set extracted by an M$^{th}$ feature extraction layer; and

iteratively refining, starting from an (M-1)$^{th}$ layer, a disparity map through the left-view feature map set and the right-view feature map set extracted by each feature extraction layer in sequence until a final disparity map is obtained based on an iteratively refined disparity map of a first layer, where an iteratively refined disparity map of an i$^{th}$ layer is obtained by refining, by using a residual of a matching cost obtained when matching the left-view feature map set and the right-view feature map set extracted by the i$^{th}$ layer, a matching cost after iterative refinement of an (i+1)$^{th}$ layer, and the disparity map used by the (M-1)$^{th}$ layer is the initial disparity map, where i is a positive integer greater than zero and less than M.

According to an aspect, provided is a disparity map acquisition apparatus is provided. The apparatus includes: a feature extraction unit, an initial disparity map construction unit and a disparity map refinement unit, where

the feature extraction unit is configured to perform feature extraction on a left-view image and a right-view image of a captured object layer by layer through M cascaded feature extraction layers, to obtain a left-view feature map set and a right-view feature map set of each layer, where M is a positive integer greater than or equal to 2;

the initial disparity map construction unit is configured to construct an initial disparity map based on the left-view feature map set and the right-view feature map set extracted by an $M^{th}$ feature extraction layer; and

the disparity map refinement unit is configured to: iteratively refine, starting from the $(M-1)^{th}$ layer, a disparity map through the left-view feature map set and the right-view feature map set extracted by each feature extraction layer in sequence until a final disparity map is obtained based on an iteratively refined disparity map of a first layer, where an iteratively refined disparity map of an $i^{th}$ layer is obtained by refining, by using a residual of a matching cost obtained when matching the left-view feature map set and the right-view feature map set extracted by the $i^{th}$ layer, a matching cost after iterative refinement of an $(i+1)^{th}$ layer, and the disparity map used by the $(M-1)^{th}$ layer is the initial disparity map, where i is a positive integer greater than zero and less than M.

According to an aspect, a computer device is provided. The computer device includes a memory, a processor, and a computer program stored on the memory and executable by the processor. The processor is configured to execute the computer program to implement operations of the method in the foregoing aspect.

According to an aspect, a control system is provided. The control system includes a binocular camera and a computer device. The binocular camera includes a left-view camera lens and a right-view camera lens. The left-view camera lens is configured to capture a left-view image, and the right-view camera lens is configured to capture a right-view image. The computer device is configured to: acquire a disparity map between the left-view image and the right-view image by performing the method in the foregoing aspect, predict a distance from a captured object in the left-view image and the right-view image to the binocular camera according to the disparity map, and control a controlled system according to the predicted distance.

According to an aspect, a computer readable storage medium is provided. The computer readable storage medium has computer instructions stored thereon. The computer instructions, when run on a computer device, cause the computer device to perform the foregoing method.

BRIEF DESCRIPTION OF THE DRAWINGS

To describe the technical solutions in the embodiments of the present disclosure more clearly, the following briefly describes the accompanying drawings required for describing the embodiments. Apparently, the accompanying drawings in the following descriptions show merely embodiments of the present disclosure, and a person of ordinary skill in the art may still derive other drawings from these accompanying drawings without creative efforts.

FIG. 1 is a schematic diagram showing a disparity between an image A and an image B according to an embodiment of the present disclosure;

FIG. 2 is a schematic diagram showing a disparity between images captured by a binocular camera according to an embodiment of the present disclosure;

FIG. 3 is a schematic diagram of an application scenario according to an embodiment of the present disclosure;

FIG. 4 is a schematic diagram of an application scenario according to another embodiment of the present disclosure;

FIG. 5 is a schematic diagram of an architecture of a disparity map acquisition model according to an embodiment of the present disclosure;

FIG. 6A is a schematic diagram of an implementation environment of a disparity map acquisition method according to an embodiment of the present disclosure;

FIG. 6B is a schematic flowchart of a disparity map acquisition method according to an embodiment of the present disclosure;

FIG. 7 is a schematic diagram of a network structure of a feature extraction module according to an embodiment of the present disclosure;

FIG. 8 is a schematic diagram of a feature map set according to an embodiment of the present disclosure;

FIG. 9 is a schematic diagram showing superimposition of feature map sets according to an embodiment of the present disclosure;

FIG. 10 is a schematic diagram of obtaining a disparity map based on a left-view image and a right-view image according to an embodiment of the present disclosure;

FIG. 11 is a schematic diagram showing intermediate feature maps according to an embodiment of the present disclosure;

FIG. 12 is a schematic structural diagram of a disparity map acquisition apparatus according to an embodiment of the present disclosure;

FIG. 13 is a schematic structural diagram of a computer device according to an embodiment of the present disclosure; and

FIG. 14 is a schematic structural diagram of a control system according to an embodiment of the present disclosure.

DESCRIPTION OF EMBODIMENTS

To make the objectives, technical solutions, and advantages of the present disclosure clearer, the following clearly and completely describes the technical solutions in the embodiments of the present disclosure with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure. The embodiments in the present disclosure and features in the embodiments may be arbitrarily combined with each other in the case of no conflict. In addition, although a logic order is shown in the flowcharts, in some cases, the shown or described steps may be performed in an order different from the order herein.

To help understand the technical solutions provided in the embodiments of the present disclosure, some key terms used in the embodiments of the present disclosure are explained herein.

A binocular camera is also called a binocular vision measurement probe, and generally includes two camera lenses that are spaced a known distance from each other. The two camera lenses are respectively used to capture two binocular images. A camera lens located on the left side is a left-view camera lens, and the image captured by the left-view camera lens is a left-view image. A camera lens located on the right side is a right-view camera lens, and the image captured by the right-view camera lens is a right-view image.

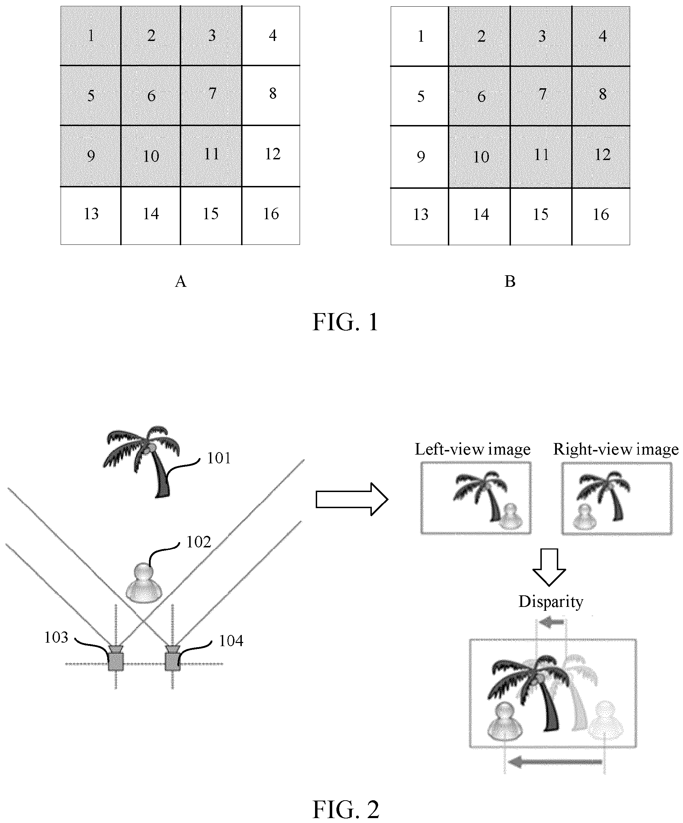

A disparity indicates a horizontal distance between center pixels of two matching blocks respectively in a left-view image and a right-view image. As shown in FIG. 1, an image A and an image B are respectively a left-view image and a right-view image, and a size of a matching block is 3*3. Matching blocks in the image A and the image B are respectively shown by gray areas in FIG. 1. Center pixels of the two matching blocks are respectively a pixel point 6 and a pixel point 7. In this case, a disparity between the two matching blocks is one pixel. In practical applications, the size of the matching block may be set according to the actual situation, for example, may be set to 1*1. In this case, the disparity is a horizontal distance between two matched pixel points.

For another example, as shown in FIG. 2, in the same scenario, a left-view image and a right-view image are obtained respectively by a camera lens 103 and a camera lens 104 capturing objects 101 and 102 in this scenario at different angles. It is clearly apparent that there is a significant difference between the left-view image and the right-view image. In the left-view image, the object 101 is located at the left side of the object 102, but in the right-view image, the object 101 is located at the right side of the object 102. A distance between positions of the same object after the left-view image and the right-view image are overlapped is the disparity between the left-view image and the right-view image at the object.

A disparity map is an image formed by representing matching blocks with disparities between the matching blocks. In the disparity map, the same disparity indicates that corresponding objects have the same distance from the camera lens, and a large disparity indicates that a corresponding object is close to the camera lens. Generally, in order to express the disparity map more intuitively, the same disparity value may be indicated by the same color, and the color may change accordingly as the disparity value changes according to a specific rule. For example, the color becomes dark as the disparity value becomes small, and the color becomes light as the disparity value becomes large.

Convolutional neural networks (CNN) are a type of feed forward neural networks including convolution calculation and having a depth structure. The convolutional neural networks may learn grid-like topology features, such as pixels, with a small calculation amount, which has a stable effect and has no additional feature engineering requirements for data. Generally, the convolutional neural network may be a network structure such as a Residual Neural Network (ResNet) and GoogleNet.

A convolutional layer is described as follows. For a device, an image is essentially stored in the form of a pixel matrix, and processing for the image is essentially performed based on the pixel matrix. In the convolutional layer, convolution operation is performed on the pixel matrix according to a preset step length and a convolution kernel of a preset size. Generally, the preset step length may be set to 1. In other words, after calculation for a convolution kernel is completed, a next convolution kernel is obtained by moving the previous convolution kernel by one pixel to the right. The preset step length may also be set to other values, for example, 2 or 3, which is not limited in the embodiment of the present disclosure.

A convolution kernel is a local area in a pixel matrix. For an image, pixels in the local area are closely related in space. For example, pixels close to each other generally have the same color texture. As a result, the correlation between the pixels close to each other is relative strong, while the correlation between pixels distant from each other is relative weak. Therefore, global information of the image may be obtained by perceiving local areas of the image and combining information of the local areas.

A convolution operation is a process of multiplying a convolution kernel of a preset size by values of weights of the convolution kernel and performing summing, moving to a next convolution kernel according to the preset step length, and multiplying the next convolution kernel by values of weights of the next convolution kernel and performing summing. A small size of the convolution kernel indicates that, the image needs to be viewed carefully, and a large amount of information is acquired from the image, and correspondingly, the calculation amount of the entire convolution operation is large. In this case, the size of the convolution kernel may be set according to the actual situation. For example, the preset size may be set to 3*3. The size of the convolution kernel may also be set to any other possible value.

A feature map is extracted through the convolutional layer of the above-mentioned convolutional neural network, and is essentially a pixel matrix. Each element in the pixel matrix may be considered as a pixel point on the feature map, and the value of a position of the pixel point is a feature value of a region or a pixel point in the original image.

An attention mechanism is essentially a means to screen high-value information from a large amount of information. The attention mechanism implements mapping from a query and a series of key-value pairs to an output. In the embodiments of the present disclosure, the query, the key, and the value are feature maps or superimposed feature maps.

In addition, the term "and/or" in this specification is merely used to describe association relationships between associated objects, including three relationships. For example, A and/or B may represent the following three cases: only A exists, both A and B exist, and only B exists. In addition, the character "/" in this specification generally indicates an "or" relationship between the associated objects unless otherwise stated.

The disparity prediction technology is required to be applied to control systems using a result of disparity prediction, such as robot control systems or autonomous vehicles. Therefore, in practical applications, accuracy of the disparity prediction directly affects determination for a distance from an object, and thus affects recovery of three-dimensional geometric information of the object, and further affects control accuracy of the control system, which may result in safety hazards.

At present, the following two methods for disparity prediction are provided.

In a first method, matching similarities of a left-view image to a right-view image at different disparities are simply predicted. In other words, during the disparity prediction, only matching information from the left-view image to the right-view image is utilized, to perform the disparity prediction on the left-view image. Therefore, this prediction method is relatively poor, and the accuracy of the disparity prediction is significantly deteriorated for areas where binocular matching is difficult, such as repetitive areas, texture missing areas, and edges of complex objects.

In a second method, a recurrent neural network is used for the disparity prediction. However, in this method, an initial disparity map is obtained by running the entire neural network for the first time, and the initial disparity map is corrected by running the entire neural network again. That is, each refinement process requires the neural network to be run again. The running time is proportional to the number of refinements, resulting in a large calculation amount and a long time.

In view of the above, a disparity map acquisition method is provided according to an embodiment of the present disclosure. In this method, an initial disparity map is constructed through a left-view feature map set and a right-view feature map set extracted by an endmost feature extraction layer, and the initial disparity map is refined layer by layer through left-view feature map sets and right-view feature map sets extracted by first (M-1) feature extraction layers, to correct the refined disparity map of the previous layer through the feature map sets extracted by each layer, thereby gradually reducing an error of the disparity map and improving accuracy of a finally obtained disparity map. Moreover, in the embodiment of the present disclosure, during the refinement of the disparity map on each layer, the disparity map outputted by the previous layer is verified through the feature map sets extracted by each layer and a residual is obtained, and a matching cost is corrected through the residual to obtain a refined disparity map. Therefore, compared with the method using a recurrent neural network, the iterative refinement in the embodiments of the present disclosure does not significantly increase the calculation amount of disparity map prediction, and the time required for obtaining the final disparity map is almost the same as that without the iterative refinement, which is more time-saving.

In addition, in the embodiments of the present disclosure, since image features described by different layers are located at different scales in the process of iterative refinement, shallow local features are gradually transitioned to deep global semantic features with the iterative refinement. In other words, reverse correction is performed the disparity map, so that the disparity map can be gradually recovered from an initial low resolution to a resolution approximate to an original image resolution, and the disparity map obtained by the prediction of the previous layer can be utilized for the estimation of the disparity map of the next layer, to continuously correct and refine the disparity map.

In the embodiments of the present disclosure, an attention mechanism is used in the iterative refinement, and the parameter scale thereof is much smaller than that of the recurrent neural network. Therefore, the calculation overhead is greatly reduced, and the time cost is saved.

After a design idea of the embodiments of the present disclosure is described, the following briefly describes application scenarios to which technical solutions in the embodiments of the present disclosure can be applied. It should be noted that, the application scenarios described below are merely used for describing rather than limiting the embodiments of the present disclosure. In specific implementations, the technical solutions provided in the embodiments of the present disclosure may be flexibly applied according to an actual requirement.

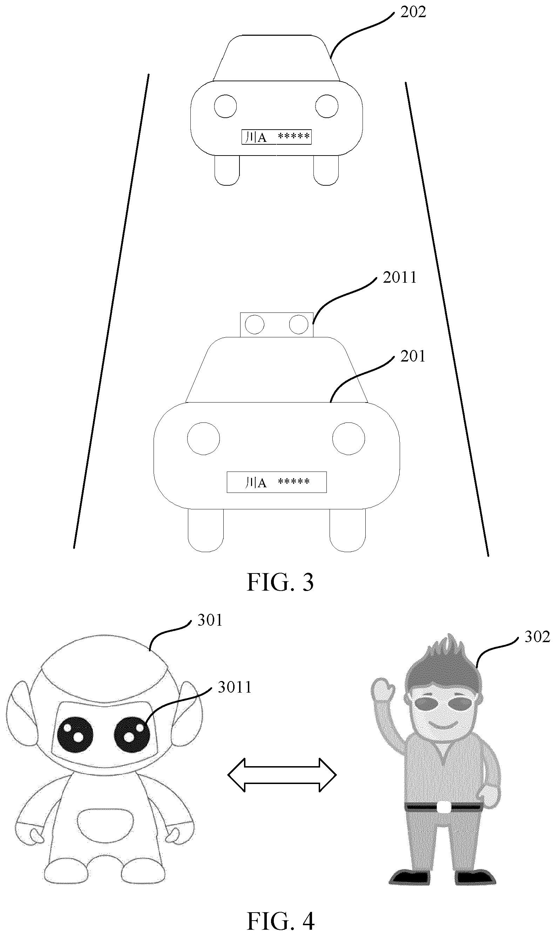

The following description is given with reference to FIG. 3. Taking an application scenario of applying the technical solutions in the embodiments of the present disclosure to an autonomous vehicle as an example, a first vehicle 201 and a second vehicle 202 are selected as an example for description.

The first vehicle 201 may be an autonomous vehicle, and the first vehicle 201 is provided with a binocular camera 2011. The binocular camera 2011 includes a left-view camera lens and a right-view camera lens. The left-view camera lens is configured to capture a left-view image, and the right-view camera lens is configured to capture a right-view image.

The second vehicle 202 may be a vehicle traveling ahead of the first vehicle 201. The second vehicle 202 may be an autonomous vehicle, and may also be a normal manually driven vehicle.

In practical applications, a left-view image and a right-view image may be captured in real time respectively by the left-view camera lens and the right-view camera lens included in the binocular camera 2011. For example, a capturing area of the camera lens is an area in front of the vehicle. In the scenario as shown in FIG. 3, the left-view image and the right-view image captured by the first vehicle 201 contains the second vehicle 202, and disparity prediction is performed on the left-view image and the right-view image by using the disparity map acquisition method provided in the embodiments of the present disclosure to acquire a disparity map between the left-view image and the right-view image. Depth prediction is performed based on the disparity map, to predict a distance from each captured object in the left-view image and the right-view image to the binocular camera 2011, such as a distance between the second vehicle 202 and the binocular camera 2011, thus assisting the first vehicle 201 to implement autonomous driving operation. For example, if it is predicted that the distance between the second vehicle 202 and the binocular camera 2011 is relatively short, the first vehicle 201 is controlled to decelerate to avoid an accident.

In this scenario, in addition to the first vehicle 201 and the second vehicle 202, all objects that the vehicle may encounter during traveling, such as roadblocks, roadside fences, traffic lights and pedestrians, may further be included, which is not limited in the embodiment of the present disclosure.

With the disparity map acquisition method provided in the embodiment of the present disclosure, a distance to each object in the capturing area of the binocular camera 2011 can be analyzed. In this way, visual perception of human eyes can be simulated by using the method provided in the embodiment of the present disclosure, thereby assisting in implementing the automated driving of the vehicle.

Reference is made to FIG. 4, which shows an application scenario of controlling a robot with the technical solutions in the embodiment of the present disclosure. In this application scenario, a robot 301 and an object 302 may be included.

The robot 301 is provided with a binocular camera 3011. The binocular camera 3011 may include a left-view camera lens and a right-view camera lens. The left-view camera lens is configured to capture a left-view image, and the right-view camera lens is configured to capture a right-view image.

The object 302 may be, for example, goods or a person. In practical applications, the binocular camera 3011 may capture the object 302 in a capturing area in real time. For example, in a case that the object 302 is a person, if the person far away is walking toward the robot 301, the binocular camera 3011 captures a left-view image and a right-view image each including an image of the person, and disparity prediction is performed on the left-view image and the right-view image by using the disparity map acquisition method provided in the embodiment of the present disclosure to acquire a disparity map between the left-view image and the right-view image. Depth prediction is performed based on the disparity map, to predict a distance from each captured object in the left-view image and the right-view image to the binocular camera 3011, for example, to determine a distance between the person and the binocular camera 3011. A focal length of the binocular camera 3011 is adjusted to track a line of sight of the person in the image, thereby simulating a change in the line of sight of a real person when someone is coming.

In addition, in a case that the person in front of the robot wants to high-five the robot, the binocular camera 3011 captures a left-view image and a right-view image each including the palm when the person raises his/her palm, and a processor included in the robot 301 performs disparity prediction on the left-view image and the right-view image by using the disparity map acquisition method provided in the embodiment of the present disclosure, to determine a distance between the palm and the binocular camera 3011, thereby controlling a mechanical arm of the robot to move to a corresponding distance position, to complete the high-five action with the person.

With the disparity map acquisition method in the embodiment of the present disclosure, a distance to each object in the capturing area of the binocular camera 3011 can be analyzed, so that the robot can have a visual perception function similar to that of human eyes, making the robot more intelligent, and assisting the robot to complete the corresponding work.

The method provided in the embodiment of the present disclosure is not limited to be applied in the application scenarios shown in FIG. 3 and FIG. 4, and may also be applied in other possible control systems, which is not limited in the embodiments of the present disclosure.

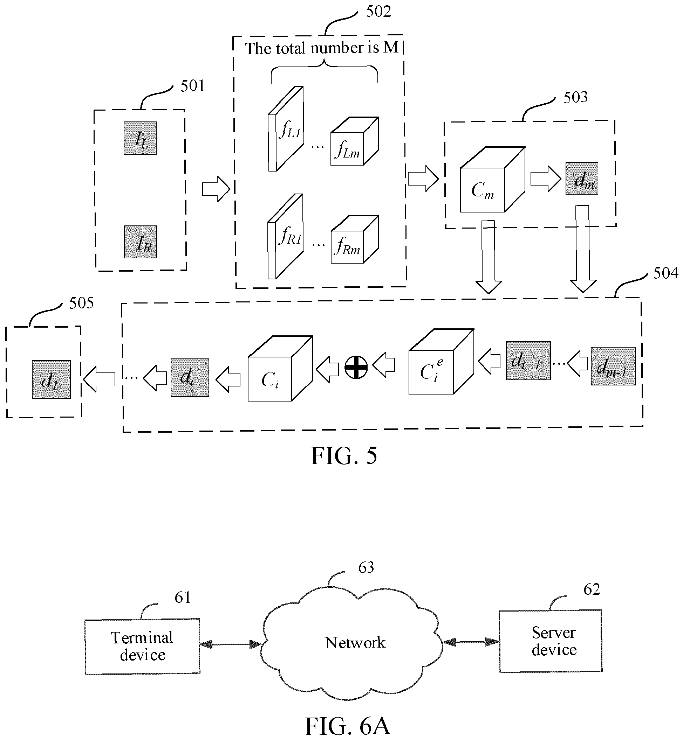

Reference is made to FIG. 5, which is a schematic diagram of an architecture of a disparity map acquisition model according to an embodiment of the present disclosure. The disparity map acquisition model includes an input module 501, a feature extraction module 502, an initial disparity estimation module 503, a disparity refinement module 504, and an output module 505. Functions respectively implemented by the modules will be described in subsequent method embodiments, which are not described in detail herein.

FIG. 6A is a schematic diagram of an implementation environment of a disparity map acquisition method according to an embodiment of the present disclosure. A terminal device 61 is in communication connection with a server device 62 through a network 63. The network 63 may be a wired network or a wireless network. A disparity map acquisition apparatus provided in any embodiment of the present disclosure is integrated on the terminal device 61 and the server device 62 to implement the disparity map acquisition method provided in any embodiment of the present disclosure. Specifically, the terminal device 61 directly performs the disparity map acquisition method provided in any embodiment of the present disclosure, or the terminal device 61 sends a left-view image and a right-view image to the server device 62, so that the server device 62 performs the disparity map acquisition method provided in any embodiment of the present disclosure and returns a result to the terminal device 61.

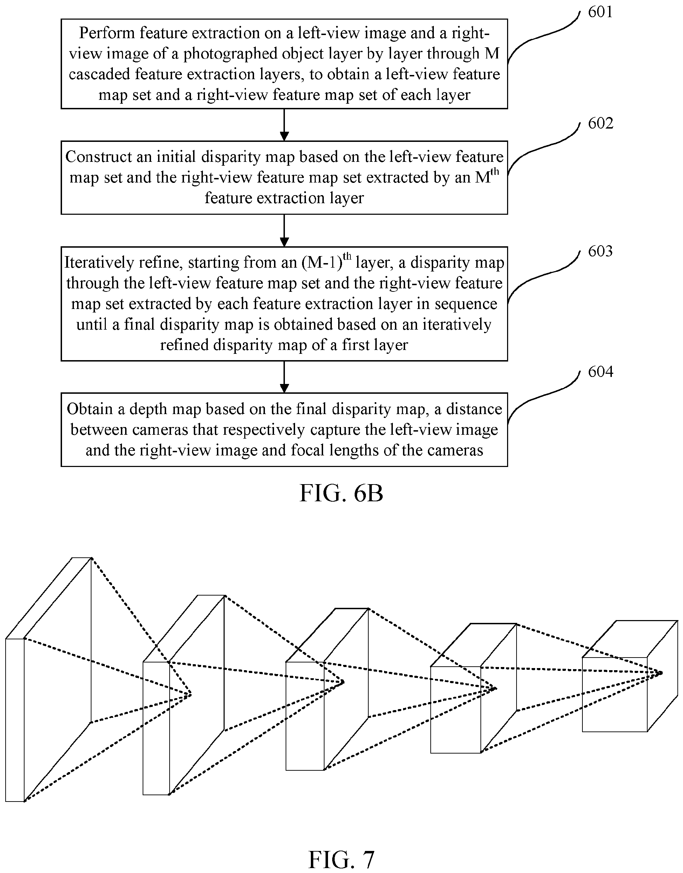

Reference is made to FIG. 6B, which is a schematic flowchart of a disparity map acquisition method according to an embodiment of the present disclosure. The method may be, for example, performed by the disparity map acquisition apparatus provided in the embodiment of the present disclosure. The apparatus may be, for example, implemented through the first vehicle 201 shown in FIG. 3 or the robot 301 shown in FIG. 4. In practical applications, the apparatus may also be implemented through a computer device with corresponding computing capabilities, for example, a personal computer (PC), a server, or a computer cluster. The method is implemented by performing the following steps 601 to 604.

In step 601, feature extraction is performed on a left-view image and a right-view image of a captured object layer by layer through M cascaded feature extraction layers, to obtain a feature map set of the left-view image and a feature map set of the right-view image of each layer.

In the embodiments of the present disclosure, the feature map set of the left-view image is also called a left-view feature map set, and the feature map set of the right-view image is also called a right-view feature map set.

In the embodiment of the present disclosure, a left-view image $f_L$ and a right-view image $f_R$ of the captured object may be acquired through the input module. The captured object refers to an object in a capturing area. For example, if the capturing area includes only one object, the object is the only captured object. If the capturing area includes multiple objects, these objects are all captured objects.

Specifically, the left-view image $f_L$ and the right-view image $f_R$ may be images captured by a binocular camera disposed on a device, or images captured by a monocular camera disposed on a device at different angles in the same scenario. After the left-view image $f_L$ and the right-view image $f_R$ are captured by the binocular camera or the monocular camera, the captured left-view image $f_L$ and right-view image $f_R$ may be inputted to the input module for subsequent disparity prediction. Further, the left-view image $f_L$ and the right-view image $f_R$ may also be images stored in a memory. If disparity prediction is required, the required left-view image $f_L$ and the required right-view image $f_R$ may be directly read from the memory and inputted to the input module. The left-view image $f_L$ and the right-view image $f_R$ may also be acquired in other possible acquisition manners, for example, by downloading from the Internet, which is not limited in the embodiment of the present disclosure.

In the embodiment of the present disclosure, after the left-view image $f_L$ and the right-view image $f_R$ are inputted to the input module, feature extraction is performed on the left-view *image* $f_L$ and the right-view imaged $f_R$ through the feature extraction module. The feature extraction module may extract the features of the left-view *image* $f_L$ and the right-view imaged $f_R$ by a deep convolutional neural network. The deep convolutional neural network may be implemented by, for example, a network structure such as ResNet or GoogleNet. The deep convolutional neural network may also be implemented by any other possible network structure, which is not limited in the embodiment of the present disclosure. The following description is given by taking the deep convolutional neural network as an example.

Specifically, the feature extraction module may include M cascaded feature extraction layers. Each feature extraction layer may extract a feature map *set* $f_{Li}$ of a left-view image and a feature map set $f_{Ri}$ of a right-view image. M is a positive integer greater than or equal to 2. The value of M may be determined according to the actual situation, for example, M may be 5. M may also be set to any other possible value, which is not limited in the embodiment of the present disclosure. Further, i represents an identifier of the feature extraction layer, where $i \in [1, M]$. In this case, the following expressions are obtained: $f_{Li} \in (f_{L1}, f_{L2}, ...f_{LM})$, and $f_{Ri} \in (f_{R1}, f_{R2}, ...f_{RM})$.

Reference is made to FIG. 7, which is a schematic diagram of a network structure of a feature extraction module. The feature extraction module shown in FIG. 7 is shown with M being 5. That is, the feature extraction module includes five feature extraction layers *conv1* to *conv5.* The characteristics of each layer are shown in Table 1 below:

Table 1

| Layer number | Layer parameter | Output | Resolution |
|---|---|---|---|
| *conv1* | [3x3,32]x3 | $f_{L1}, f_{R1}$ | $H/2 \times W/2$ |
| *Conv2* | $\begin{bmatrix}3x3,32\\3x3,32\end{bmatrix}x3$ | $f_{L2}, f_{R2}$ | $H/2 \times W/2$ |
| *Conv3* | $\begin{bmatrix}3x3,64\\3x3,64\end{bmatrix}x16$ | $f_{L3}, f_{R3}$ | $H/4 \times W/4$ |
| *Conv4* | $\begin{bmatrix}3x3,64\\3x3,64\end{bmatrix}x3$ | $f_{L4}, f_{R4}$ | $H/8 \times W/8$ |
| *Conv5* | $\begin{bmatrix}3x3,64\\3x3,64\end{bmatrix}x3$ | $f_{L5}, f_{R5}$ | $H/16 \times W/16$ |

As shown in Table 1, the layer parameter includes the number of components, the number c of channels, and the size of the convolution kernel in each layer. The resolution is a resolution of the extracted feature map. For example, the layer parameter [3×3,32]×3 of the layer *conv1* indicates that the number of components of this layer is 3, and each component includes one sub-layer. In this case, the layer *conv1* includes three sub-layers in total. The layer parameter [3 ×3,32] ×3 of the layer *conv1* further indicates that the number c of channels in this layer is 32. That is, feature extraction is performed in 32 feature dimensions to obtain 32 feature maps, and each feature map is used for representing data of one feature extracted from an original image. The layer parameter [3×3,32]×3 of the layer *conv1* further indicates that the size of the convolution kernel for convolution operation in this layer is 3×3. The resolution of the feature map extracted by the layer *conv1* is $H/2 \times W/2$, where H and W represents a height and a width of the original image, respectively. That is, the size of the feature map extracted by the layer *conv1* is half of that of the original image. For another example, the layer parameter $\begin{bmatrix}3 \times 3,32\\3 \times 3,32\end{bmatrix} \times 3$ of the layer *conv2* indicates that the number of components of this layer is 3, and each component includes two sub-layers. In this case, the layer *conv1* includes six sub-layers in total. The layer parameter $\begin{bmatrix}3 \times 3,32\\3 \times 3,32\end{bmatrix} \times 3$ of the layer *conv2* further indicates that the number of channels in this layer is 32, and the size of the convolution kernel of each component is 3×3.

In practical applications, the layer parameter and the resolution of each layer may be adjusted, and are not limited to the parameters shown in Table 1. In addition, in order to improve the effect of feature extraction, one or more feature extraction layers may be added to the layer *conv1*. The layer parameters of these feature extraction layers may be the same as or different from that of the layer *conv1,* and the resolutions of these feature extraction layers may be the same as or different from that of the layer *conv1.* These layers are used to increase the complexity of the neural network and improve the effect of feature extraction. The feature map sets outputted by these layers may not be used in the subsequent disparity prediction process.

In the embodiment of the present disclosure, as shown in FIG. 7, the process of feature extraction is performed layer by layer, that is, the feature map set extracted by the previous layer may be used as the input of the next layer. For example, for the left-view image, the left-view feature map set extracted by the layer *conv1* may be used as the input of the layer *conv2.* Moreover, with reference to Table 1, it can be seen that, the resolutions of the feature maps extracted by the feature extraction layers are decreased layer by layer, that is, the extracted features are gradually transitioned from a low level to a high level.

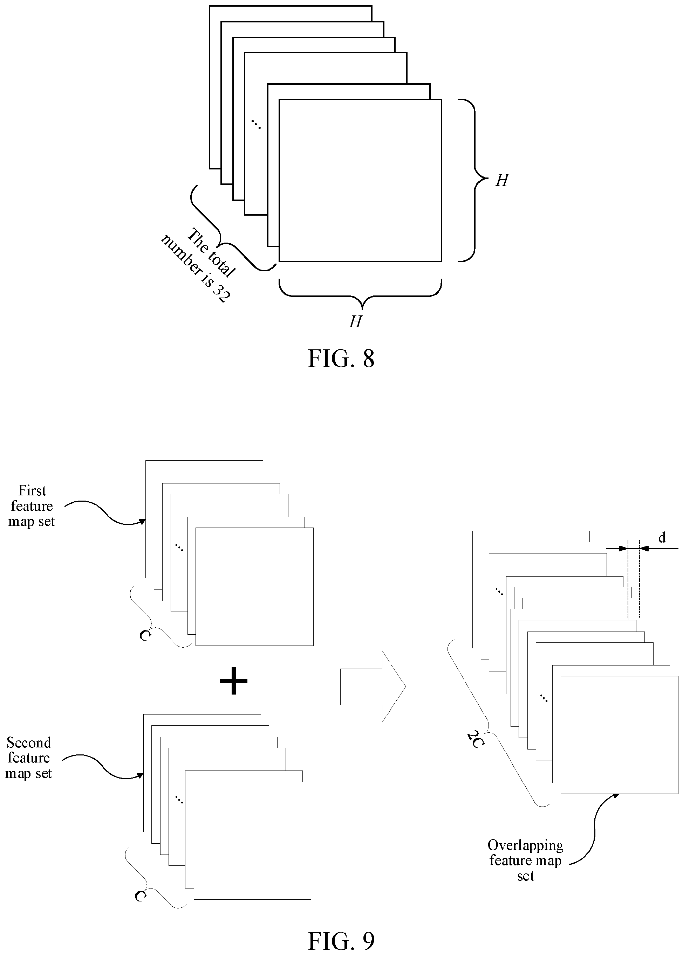

Reference is made to FIG. 8, which is a schematic diagram of a left-view feature map set extracted by a layer *conv1.* The number c of channels of the left-view feature map set is 32, that is, the left-view feature map set includes 32 feature maps. Each feature map represents feature data of a left-view image in one feature dimension. Moreover, the resolution of the left-view feature map set extracted by the layer *conv1* is $H/2 \times W/2$, that is, the resolution of each feature map is also H/2 × W/2. Pixel points at the same position in the feature maps in the left-view feature map set are essentially the same pixel point, and the data of the pixel points at the same position in the feature maps each represents feature data of the same pixel point in a corresponding feature dimension. However, the pixel points in the feature maps are not equivalent to the pixel point in the left-view image. The right-view feature map set and the feature map sets of other layers are similar to the left-view feature map set extracted by the layer *conv1,* and reference may thus be made to the structure and description of the left-view feature map set extracted by the layer *conv1.* Therefore, the details are not described herein again.

In step 602, an initial disparity map is constructed based on the left-view feature map set and the right-view feature map set extracted by an $M^{th}$ feature extraction layer.

In the embodiment of the present disclosure, after the left-view feature map set and the right-view feature map set of each layer are extracted by the feature extraction module, an initial disparity map can be constructed through the initial disparity estimation module. Specifically, since the resolutions of the feature maps extracted by the feature extraction layers in the embodiment of the present disclosure are decreased layer by layer, the initial disparity map may be constructed through the feature map with a minimum resolution. In this way, in the subsequent refinement of the disparity map, reverse adjustment may be made to finally restore the disparity map to a size the same as that of the original image. In other words, the initial disparity map may be constructed using the left-view feature map set and the right-view feature map set extracted by the $M^{th}$ feature extraction layer.

In practical applications, the matching information from a left view to a right view may be not exactly the same as the matching information from the right view to the left view. If the matching information from the left view to the right view or the matching information from the right view to the left view is used separately, complementary information of binocular vision cannot be fully utilized for binocular comparison. Therefore, in the embodiment of the present disclosure, in the construction of the initial disparity map, two initial disparity maps may be constructed, i.e., a left-view initial disparity map and a right-view initial disparity map. In some cases, the model may be adjusted according to the actual situation, that is, only one initial disparity map is constructed, which is not limited in the embodiments of the present disclosure.

The left-view initial disparity map is constructed using matching information from the left-view feature map set to the right-view feature map set, that is, the left-view initial disparity map is obtained based on a disparity value between each pixel point in the left-view feature map set and a corresponding matched pixel point in the right-view feature map set. The right-view initial disparity map is constructed using matching information from the right-view feature map set to the left-view feature map set, that is, the right-view initial disparity map is obtained based on a disparity value between each pixel point in the right-view feature map set and a corresponding matched pixel point in the left-view feature map set. For a pixel point in the left-view feature map set, a corresponding matched pixel point thereof in the right-view feature map set refers to a pixel point in the right-view feature map set having a similarity greater than a preset similarity threshold to this pixel point in the left-view feature map set, or a pixel point in the right-view feature map set having a maximum similarity to this pixel point in the left-view feature map set.

In the embodiment of the present disclosure, since the construction process of the left-view initial disparity map is similar to that of the right-view initial disparity map, the following description is made by taking the process of constructing one initial disparity map as an example. In the following description, a first feature map set is any one of the left-view feature map set and the right-view feature map set extracted by the $M^{th}$ layer, and a second feature map set is the other one of the left-view feature map set and the right-view feature map set extracted by the $M^{th}$ layer. That is, the first feature map set may be the left-view feature map set extracted by the $M^{th}$ layer, and the second feature map set is the right-view feature map set extracted by the $M^{th}$ layer. In this case, the left-view initial disparity map is constructed. Moreover, the first feature map set may also be the right-view feature map set extracted by the $M^{th}$ layer, and the second feature map set is the left-view feature map set extracted by the $M^{th}$ layer. In this case, the right-view initial disparity map is constructed.

In the embodiment of the present disclosure, in the construction of the initial disparity map, a disparity value between each pixel point in the first feature map set and a corresponding matched pixel point in the second feature map set is obtained, and the disparity value corresponding to the each pixel point is mapped to the first feature map set to obtain the initial disparity map.

To determine the disparity value between each pixel point in the first feature map set and the corresponding matched pixel point in the second feature map set, the corresponding matched pixel point in the second feature map set needs to be determined first. Specifically, multiple disparity values may be set in advance, the pixel points in the left-view and right-view feature map sets are attempted to be matched according to the disparity value, and a pixel point with a minimum matching cost is selected as the matched pixel point.

In practical applications, since two camera lenses of the binocular camera are generally disposed on the same horizontal plane, the disparity in the image only in the horizontal direction needs to be considered. In this case, the left-view feature map set and the right-view feature map set extracted by the $M^{th}$ layer may be connected in the horizontal direction in a pixel-by-pixel misaligned manner, to obtain a 4D tensor. That is, the second feature map set is superimposed to the first feature map set in a feature dimension according to each preset disparity value in a preset disparity range, to obtain an overlapping feature map set corresponding to the preset disparity value. The 4D tensor is composed of overlapping feature map sets respectively corresponding to the preset disparity values. The horizontal direction refers to a width direction of the image.

Specifically, the pixel-by-pixel misaligned connection refers to that, one of all the preset disparity values in the preset disparity range is selected in turn, and the second feature map set is superimposed to the first feature map set in a feature dimension based on the selected preset disparity value, to obtain an overlapping feature map set corresponding to the selected preset disparity value. Accordingly, in a case that the preset disparity range includes N preset disparity values, N superimpositions are performed. Reference is made to FIG. 9, which is a schematic diagram of one of the superimpositions. The preset disparity value shown in FIG. 9 is d. That is, the first feature map set and the second feature map set are superimposed after misaligning by d pixel points. The feature dimension of each of the first feature map set and the second feature map set before the superimposition is C, and the feature dimension of the overlapping feature map set after the superimposition is thus 2C.

Taking the connection of $f_{L5}$ and $f_{R5}$ as an example, the resolutions of $f_{L5}$ and $f_{R5}$ are both $(H/16)*(W/16)$. In this case, by connecting $f_{L5}$ and $f_{R5}$ in the horizontal direction in the pixel-by-pixel misaligned manner, a 4-dimensional (4D) tensor having a dimension of $2c*(d_{max}/16)*(H/16)*(W/16)$ is obtained, where c represents the number of channels of the layer *conv5*, H and W respectively represents the height and the width of the original image (the left-view image and the right-view image), and $d_{max}$ represents a preset upper limit of the disparity value. The $d_{max}$ may be a maximum disparity value of the original image set according to experiences. For example, in a case that $d_{max}$ is set to 160 and c is set to 64, the upper limit of the disparity corresponding to the layer *conv5* is 10, and the corresponding preset disparity range is [1,10]. Thus, the dimension of the obtained 4D tensor is $128*10*(H/16)*(W/16)$.

In the embodiment of the present disclosure, after obtaining the overlapping feature map sets respectively corresponding to the preset disparity values, matching cost values of overlapping pixel point pairs in each overlapping feature map set are obtained, and a preset disparity value corresponding to an overlapping pixel point pair having a minimum matching cost value among all overlapping pixel point pairs where each pixel point is located is determined as the disparity value between the each pixel point and the corresponding matched pixel point. Each overlapping pixel point pair includes a first pixel point in the first feature map set, and a second pixel point in the first feature map set, where a disparity value between the second pixel point and the first pixel point is one of the preset disparity values. The matching cost value of the overlapping pixel point pair is negatively correlated with a similarity between the first pixel point and the second pixel point. That is, a large matching cost value of the overlapping pixel point pair corresponds to a small similarity between the two pixel points.

Specifically, for each preset disparity value, an overlapping feature map set corresponding to the preset disparity value, i.e., the 4D tensor obtained above, is inputted into a 3-dimensional (3D) convolutional layer to calculate matching cost values of overlapping pixel point pairs in the overlapping feature map set. A 3D tensor $C_m$ formed by the matching cost values of the overlapping pixel point pairs in the overlapping feature map set is a tensor with a dimension of $(d_{max}/16)*(H/16)*(W/16)$. The 3D tensor is then inputted into a 2-dimensional (2D) convolutional layer to obtain an initial disparity map $d_m$. For each overlapping pixel point pair in the overlapping feature map set, the processing of the 3D convolutional layer is equivalent to calculating the matching cost value between two pixel points forming the overlapping pixel point pair, and the processing of the 2D convolutional layer is equivalent to selecting a minimum matching cost value from the matching cost values corresponding to the pixel points.

For a first pixel point in the first feature map set, the same number of overlapping pixel point pairs as the number of preset disparity values in the preset disparity range are formed by the pixel-by-pixel misaligned connection, and two pixel points that form the overlapping pixel point pair having the minimum matching cost value are pixel points that match each other. Accordingly, the preset disparity value corresponding to the two pixel points that match each other is a disparity value between the first feature map set and the second feature map set at a position of the first pixel point. For example, in a case that the number of preset disparity values is 10, the first pixel point forms 10 overlapping pixel point pairs together with 10 pixel points in the second feature map set having a disparity not greater than 10. Matching cost values of the 10 overlapping pixel point pairs are determined by the processing of the 3D convolutional layer, and further an overlapping pixel point pair having the minimum matching cost value is determined by the processing of the 2D convolutional layer. In the overlapping pixel point pair, the other one pixel point than the first pixel point is the matched pixel point in the second feature map set corresponding to the first pixel point.

In the embodiment of the present disclosure, disparity values respectively corresponding to all pixel points in the first feature map set may be obtained in the same manner as above, and the disparity values respectively corresponding to all the pixel points form the initial disparity map $d_m$.

In step 603, starting from the $(M-1)^{th}$ layer, a disparity map is iteratively refined through the left-view feature map set and the right-view feature map set extracted by each feature extraction layer in sequence until a final disparity map is obtained based on an iteratively refined disparity map of the first layer.

In the embodiment of the present disclosure, after the initial disparity map is acquired by the initial disparity estimation module, the initial disparity map may be iteratively refined by the disparity refinement module to gradually improve the accuracy of the disparity map. The initial disparity map acquired by the initial disparity estimation module may include a left-view initial disparity map and a right-view initial disparity map. Therefore, in practical applications, the left-view initial disparity map and the right-view initial disparity map each are iteratively refined by the disparity refinement module, and the iterative refinement processes for the left-view initial disparity map and the right-view initial disparity map are substantially the same. The subsequent description is given by taking one initial disparity map as an example.

Specifically, since the iterative refinement processes of the layers are substantially the same, the technical solutions in the embodiment of the present disclosure are described below by taking the iterative refinement process of an $i^{th}$ layer as an example. In the iterative refinement of the $i^{th}$ layer, an iteratively refined disparity map of the $(i+1)^{th}$ layer is inputted. Further, in the case of i = M-1, the inputted disparity map is the initial disparity map due to being the first iterative refinement. It should be noted that, since the iterative refinement is not required to be performed on the $M^{th}$ layer, the value of i is a positive integer greater than zero and less than M in the iterative refinement process.

In the embodiment of the present disclosure, the resolutions of the feature map sets obtained by the feature extraction are decreased sequentially. Thus, in the iterative refinement process, the iterative refinement may be performed layer by layer in an order reverse to the feature extraction order of the feature extraction layers, so that the resolution of the finally obtained disparity map is the closest to the resolution of the original image. The value of i is a positive integer from 1 to M-1. For example, the number of the feature extraction layers is 5. In this case, the feature extraction is performed in the order of $1{\to}2{\to}3{\to}4{\to}5$. After the initial disparity map is obtained based on the feature map set of the fifth layer, the initial disparity map is refined using the feature map set of the fourth layer, and the disparity map outputted by the previous layer is refined sequentially in the order of $3{\to}2{\to}1$.

In the following description, a third feature map set is any one of the left-view feature map set and the right-view feature map set extracted by the $i^{th}$ layer, and a fourth feature map set is the other one of the left-view feature map set and the right-view feature map set extracted by the $i^{th}$ layer. That is, the third feature map set may be the left-view feature map set extracted by the $i^{th}$ layer, and the fourth feature map set is the right-view feature map set extracted by the $i^{th}$ layer. Further, the third feature map set may also be the right-view feature map set extracted by the $i^{th}$ layer, and the fourth feature map set is the left-view feature map set extracted by the $i^{th}$ layer.

The iterative refinement process of the $i^{th}$ layer is described as follows.

As shown in Table 1, the resolutions of the feature extraction layers are decreased sequentially. The resolution of the disparity map formed after the iterative refinement of the $(i+1)^{th}$ layer is only one half of the resolution of the left-view feature map set and the right-view feature map set extracted by the $i^{th}$ layer. Due to the different resolutions, the iteratively refined disparity map of the $(i+1)^{th}$ layer cannot be directly processed. Therefore, before each iterative refinement, the iteratively refined disparity map of the $(i+1)^{th}$ layer is required to be upsampled, so that the upsampled disparity map has the same resolution as the left-view feature map set and the right-view feature map set extracted by the $i^{th}$ layer. For example, for an initial disparity map $d_5$ obtained based on the layer $conv5$ in Table 1, $d_5$ is required to be upsampled firstly to obtain $d_5{}^{up}$ having a size of $(H/8)*(W/8)$.

If the resolution of the feature map extracted by the $i^{th}$ layer is the same as the resolution of the feature map extracted by the $(i+1)^{th}$ layer, no upsampling process is required, and the upsampled disparity map used in the subsequent process is replaced with the iteratively refined disparity map of the $(i+1)^{th}$ layer. The following description is given by taking the case of requiring upsampling as an example.

In a specific implementation, the upsampling process on the disparity map may be implemented by performing an interpolation process on the disparity map. The interpolation process may be implemented by, for example, a bilinear interpolation method or a bicubic interpolation method. The interpolation process may also be implemented by any other possible interpolation method, which is not limited in the embodiments of the present disclosure.

After the upsampled disparity map is obtained, the third feature map set is mapped to the fourth feature map set according to the upsampled disparity map, to obtain the mapped feature map set corresponding to the third feature map set.

Specifically, the process of mapping the third feature map set to the fourth feature map set according to the disparity map refers to a process in which, for each pixel point in the third feature map set, a corresponding disparity value is searched from the disparity map, and the pixel point is mapped into the fourth feature map set according to the disparity value. In this way, the third feature map set is converted to the same coordinate system as the fourth feature map set based on the existing disparity. For example, for a first pixel point in the right-view feature map set, coordinates of this pixel point in the right-view feature map set are (5, 5), and the corresponding disparity value thereof is 5. Thus, after being mapped into the left-view feature map set, the coordinates of this pixel point should be (0, 5), that is, this pixel point is shifted to the left by five pixels in the horizontal direction.

Still referring to the above-mentioned example of $d_5{}^{up}$, the right-view feature map set $f_{R4}$ extracted by the layer conv4 may be mapped to a left-view feature map set according to $d_5{}^{up}$ to obtain a mapped feature map *set $f_{L4}{}^{w}$*. In the mapping of the feature map set, all feature maps in the feature map set each are mapped to the left-view feature map

set according to $d_5{}^{\text{up}}$.

After the mapped feature map set corresponding to the third feature map set is obtained, the mapped feature map set and the iteratively refined disparity map of the $(i+1)^{\text{th}}$ layer are superimposed to the fourth feature map set in a feature dimension, to obtain an overlapping feature map set. The superimposing process herein is similar to the superimposing process in step 602. Therefore, reference may be made to the description of the superimposing process in step 602, and the details are not repeated here.

Still referring to the above-mentioned example of $d_5{}^{\text{up}}, f_{L4}, f_{L4}{}^w$ and $d_5{}^{\text{up}}$ may be superimposed in the feature dimension to obtain a 3-dimensional tensor $f_4{}^c$ having a dimension of $129*(H/8)*(W/8)$. For the convenience of subsequent calculation, the dimension of $f_4{}^c$ may be reduced so that $f_4{}^c$ becomes a 3-dimensional tensor having a dimension of $128*(H/8)*(W/8)$.

In the embodiments of the present disclosure, since $d_5{}^{\text{up}}$ is obtained by the upsampling process, some inevitable errors exist. Therefore, after the mapped feature map set and the fourth feature map set are superimposed, a mismatch may exist in the overlapping pixel point pair in the overlapping feature map set. In this case, $d_5{}^{\text{up}}$ may be corrected through the overlapping feature map set.

Specifically, the overlapping feature map set is inputted into an attention model to obtain an attention feature map set $f_i{}^{\text{attn}}$. The attention feature map set is used for indicating a difference degree between the mapped feature map set and the fourth feature map set. The $f_i{}^{\text{attn}}$ is a tensor having a dimension of $128*(H/8)*(W/8)$.

The attention model may be formed by a simple multilayer convolutional neural network. For example, the attention model may be an attention model with a similarity between the overlapping pixel point pairs as the weight, or an attention model with a similarity between channels of the overlapping pixel point pairs as the weight.

In the embodiments of the present disclosure, after $f_i{}^{\text{attn}}$ is obtained, a residual $C_i{}^e$ of the matching cost between the mapped feature map set and the fourth feature map set may be calculated based on $f_i{}^{\text{attn}}$. For example, $f_i{}^{\text{attn}}$ may be inputted into a 2D convolutional network to obtain the residual $C_i{}^e$ of the matching cost. For example, for the layer conv4 described above, the dimension of the residual $C4^e$ is $(d_{max}/8)*(H/8)*(W/8)$.

The residual $C_i{}^e$ herein is essentially a matching cost, which indicates the matching cost between the fourth feature map set and the mapped feature map set based on the multiple preset disparity values in the preset disparity range. Since the mapped feature map set herein is obtained through the mapping based on the upsampled disparity map, the residual $C_i{}^e$ herein is only a part of the matching cost between the left-view image and the right-view image in terms of the original image. In this case, the residuals $C_i{}^e$ and $C_{i-1}$ may be added to obtain a refined matching cost $C_i$ and the iteratively refined disparity map $d_i$ of the $i^{\text{th}}$ layer may be obtained according to $C_i$. Since the dimension of $C_{i-1}$ is different from that of $C_i{}^e$, $C_{i-1}$ may be processed through the convolutional network, so that the dimension of $C_{i-1}$ is the same as that of $C_i{}^e$. As shown in FIG. 5, the residuals $C_4{}^e$ and $C5$ are used to obtain the refined matching cost $C_4$, and the iteratively refined disparity map $d_4$ is obtained according to $C_4$.

The process of obtaining the iteratively refined disparity map $d_i$ of the $i^{\text{th}}$ layer according to $C_i$ is the same as the process of obtaining the initial disparity map $d_m$ according to $C_m$, which is not repeated herein.

In the embodiments of the present disclosure, the above-mentioned iterative refinement process ends until the disparity map outputted after the iterative refinement of the first layer is obtained, and the disparity map outputted after the iterative refinement of the first layer is the final disparity map.

In the embodiments of the present disclosure, taking the feature extraction layers in Table 1 as an example, the resolution of the obtained d1 is $(H/2)*(W/2)$. In this case, the result obtained by upsampling the d1 may be used as the final disparity map. Whether to perform upsampling depends on the resolutions of the finally obtained disparity map and the original image.

In step 604, a depth map is obtained based on the final disparity map, a distance between camera lenses that respectively capture the left-view image and the right-view image, and focal lengths of the camera lenses.

In the embodiment of the present disclosure, the depth map is calculated based on the final disparity map, the distance between the camera lenses that respectively capture the left-view image and the right-view image, and the focal lengths of the camera lenses. The depth map is used for indicating distances from the captured object to the camera lenses. The application of the depth map has already been introduced in the aforementioned application scenarios, which is not repeated herein.

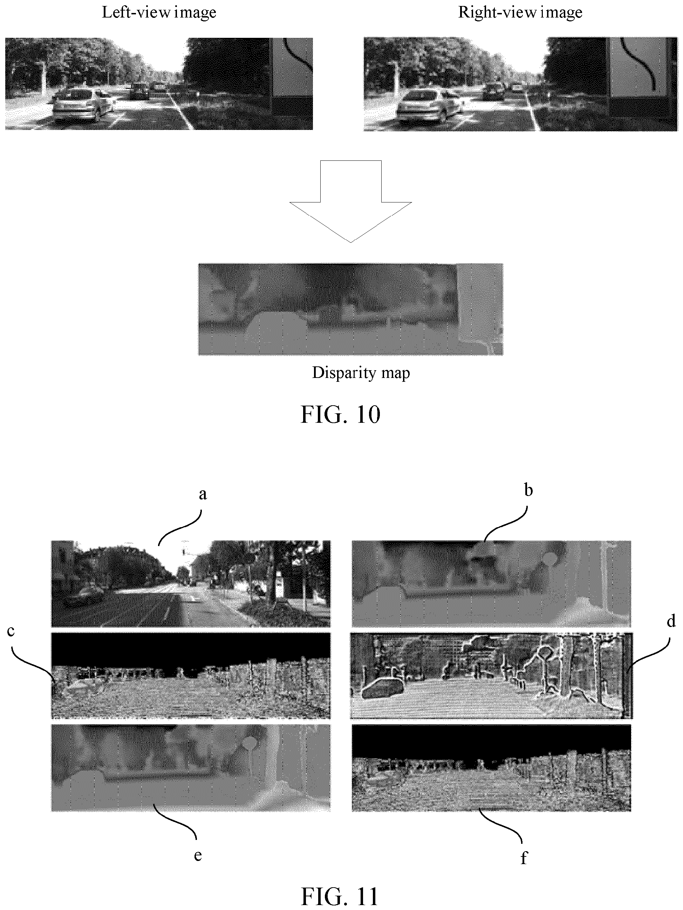

Reference is made to FIG. 10, which is a schematic diagram of obtaining a disparity map based on a left-view image and a right-view image. The disparity map herein is a left-view disparity map. It can be seen that, a gray value of a pixel in the disparity map can reflect a distance to an object.

In practical applications, the above-mentioned disparity map acquisition model in the embodiment of the present disclosure needs to be trained in advance. That is, after an initial model is established, the initial model may be trained and learned through multiple training samples. Each training sample includes a left-view image and a right-view image, and a real disparity map of the left-view image and the right-view image. Moreover, disparity map prediction is performed on the multiple training samples through the initial model, and a cost error between the predicted disparity map and the real disparity map is calculated through a cost function. Then, model parameters are adjusted according to the cost value, and training is performed again until the cost error meets requirements.

Reference is made to FIG. 11, which shows multiple intermediate feature maps obtained by a disparity map acquisition method according to an embodiment of the present disclosure. In FIG. 11, an image a is an inputted left-view image, an image b is an obtained initial disparity map, an image c shows an error between the initial disparity map and a real disparity map, an image d is an attention map obtained by learning, i.e., $f_i^{attn}$, an image e is a refined disparity map, and an image f shows an error between the initial disparity map and the real disparity map.

In conclusion, in the embodiment of the present disclosure, an initial disparity map is constructed through a left-view feature map set and a right-view feature map set extracted by an endmost feature extraction layer, and the initial disparity map is refined layer by layer through left-view feature map sets and right-view feature map sets extracted by first (M-1) feature extraction layers, to correct the refined disparity map of the previous layer through the feature map sets extracted by each layer, thereby gradually reducing an error of the disparity map and improving accuracy of a finally obtained disparity map. Moreover, in the embodiment of the present disclosure, during the refinement of the disparity map on each layer, the disparity map outputted by the previous layer is verified through the feature map sets extracted by each layer and a residual is obtained, and a matching cost is corrected through the residual to obtain a refined disparity map. Therefore, compared with the method using a recurrent neural network, the iterative refinement in the embodiments of the present disclosure does not significantly increase the calculation amount of disparity map prediction, and the time required for obtaining the final disparity map is almost the same as that without the iterative refinement, which is more time-saving.

In addition, in the embodiment of the present disclosure, extraction granularities of the M feature extraction layers are increased layer by layer. In this case, since image features described by different layers are located at different scales in the process of iterative refinement, shallow local features are gradually transitioned to deep global semantic features with the iterative refinement. In other words, reverse correction is performed on the disparity map, so that the disparity map can be gradually recovered from an initial low resolution to a resolution approximate to an original image resolution, and the disparity map obtained by the prediction of the previous layer can be used for the estimation of the disparity map of the next layer, to continuously correct and refine the disparity map.

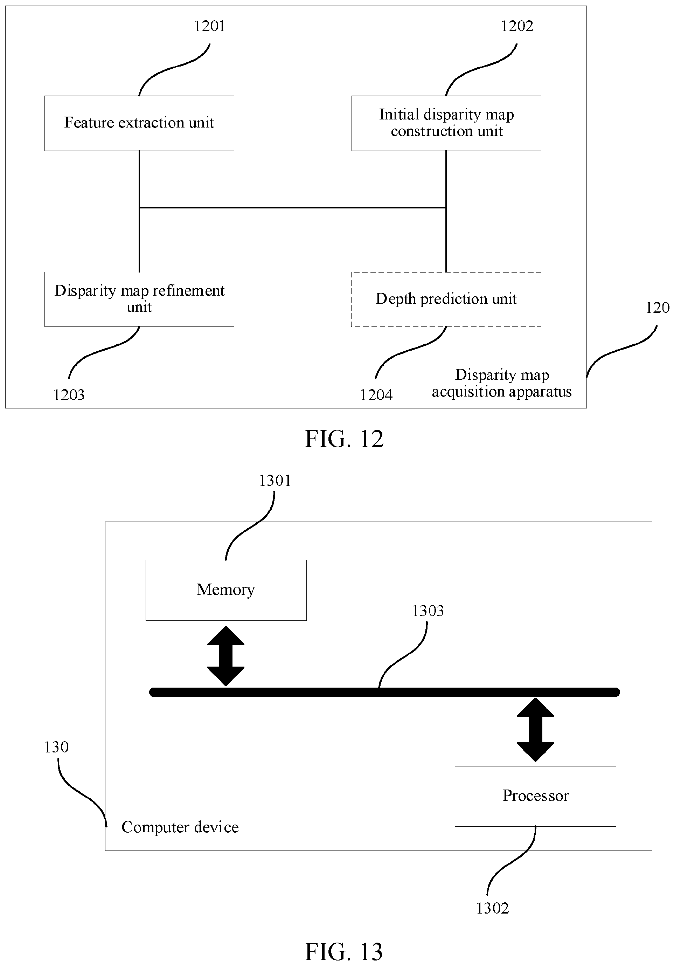

Referring to FIG. 12, based on the same inventive concept, a disparity map acquisition apparatus 120 is further provided according to an embodiment of the present disclosure. The disparity map acquisition apparatus 120 includes: a feature extraction unit 1201, an initial disparity map construction unit 1202, and a disparity map refinement unit 1203.

The feature extraction unit 1201 is configured to perform feature extraction on a left-view image and a right-view image of a captured object layer by layer through M cascaded feature extraction layers, to obtain a feature map set of the left-view image and a feature map set of the right-view image of each layer, where M is a positive integer greater than or equal to 2.

The initial disparity map construction unit 1202 is configured to construct an initial disparity map based on a left-view feature map set and a right-view feature map set extracted by an $M^{th}$ feature extraction layer.

The disparity map refinement unit 1203 is configured to, iteratively refine, starting from an $(M-1)^{th}$ layer, a disparity map through the left-view feature map set and the right-view feature map set extracted by each feature extraction layer in sequence until a final disparity map is obtained based on an iteratively refined disparity map of a first layer. The iteratively refined disparity map of an $i^{th}$ layer is obtained by refining, by using a residual of a matching cost when matching the left-view feature map set and the right-view feature map set extracted by the $i^{th}$ layer, a matching cost after iterative refinement of an $(i+1)^{th}$ layer. The disparity map used by the $(M-1)^{th}$ layer is the initial disparity map, where i is a positive integer greater than zero and less than M.

In the embodiment of the present disclosure, the initial disparity map includes a left-view initial disparity map and a right-view initial disparity map. The left-view initial disparity map is obtained based on a disparity value between each pixel point in the left-view feature map set and a corresponding matched pixel point in the right-view feature map set. The right-view initial disparity map is obtained based on a disparity value between each pixel point in the right-view feature map set and a corresponding matched pixel point in the left-view feature map set.

The disparity map refinement unit 1203 is specifically configured to: iteratively refine, starting from the $(M-1)^{th}$ layer, a left-view disparity map and a right-view disparity map respectively through the left-view feature map set and the right-view feature map set extracted by each feature extraction layer in sequence.

In the embodiment of the present disclosure, the initial disparity map construction unit 1202 is specifically configured to:

for each pixel point in a first feature map set, acquire a disparity value between each pixel point and a corresponding matched pixel point in a second feature map set, where the first feature map set is any one of the left-view feature map set and the right-view feature map set extracted by the $M^{th}$ layer, and the second feature map set is the other one of the left-view feature map set and the right-view feature map set extracted by the $M^{th}$ layer; and

map the disparity value corresponding to the pixel point to the first feature map set to obtain the initial disparity map.

In the embodiment of the present disclosure, the initial disparity map construction unit 1202 is specifically configured to:

superimpose the second feature map set to the first feature map set in a feature dimension according to each of preset disparity values in a preset disparity range, to obtain an overlapping feature map set corresponding to the preset disparity value;

acquire matching cost values of overlapping pixel point pairs in the overlapping feature map set, where each of the overlapping pixel point pairs includes a first pixel point in the first feature map set, and a second pixel point in the first feature map set, with a disparity value between the second pixel point and the first pixel point being one of the preset disparity values, and the matching cost value of the overlapping pixel point pair is negatively correlated with a similarity between the first pixel point and the second pixel point; and

determine a preset disparity value corresponding to an overlapping pixel point pair having a minimum matching cost value among all overlapping pixel point pairs where each pixel point in the first feature map set is located, as the disparity value between the pixel point and the corresponding matched pixel point.

In the embodiment of the present disclosure, the disparity map refinement unit 1203 is specifically configured to:

map a third feature map set to a fourth feature map set according to an iteratively refined disparity map of the $(i+1)^{th}$ layer, to obtain a mapped feature map set corresponding to the third feature map set, where the third feature map set is any one of the left-view feature map set and the right-view feature map set extracted from the $i^{th}$ layer, and the fourth feature map set is the other one of the left-view feature map set and the right-view feature map set extracted by the $i^{th}$ layer;

superimpose the mapped feature map set and the iteratively refined disparity map of the $(i+1)^{th}$ layer to the fourth feature map set in a feature dimension, to obtain an overlapping feature map set; and

obtain, according to the overlapping feature map set, the residual of the matching cost when matching the left-view feature map set and the right-view feature map set extracted by the $i^{th}$ layer.

In the embodiment of the present disclosure, the disparity map refinement unit 1203 is specifically configured to: upsample an iteratively refined disparity map of the $(i+1)^{th}$ layer such that an upsampled disparity map has the same resolution as the left-view feature map set and the right-view feature map set extracted by the $i^{th}$ layer. The process of mapping the third feature map set to the fourth feature map set according to the iteratively refined disparity map of the $(i+1)^{th}$ layer to obtain the mapped feature map set corresponding to the third feature map set includes: mapping the third feature map set to the fourth feature map set according to the upsampled disparity map, to obtain the mapped feature map set corresponding to the third feature map set.

In the embodiment of the present disclosure, the disparity map refinement unit 1203 is specifically configured to:

obtain an attention feature map set through an attention mechanism and the overlapping feature map set; and

obtain, according to the attention feature map set, the residual of the matching cost when matching the left-view feature map set and the right-view feature map set extracted by the $i^{th}$ layer.

In the embodiment of the present disclosure, the apparatus further includes a depth prediction unit 1204. The depth prediction unit 1204 is configured to: obtain a depth map based on the final disparity map, a distance between camera lenses that respectively capture the left-view image and the right-view image, and focal lengths of the camera lenses. The depth map is used for indicating distances from the captured object to the camera lenses.

The apparatus may be configured to perform the method shown in the embodiments shown in FIG. 6B to FIG. 9. Therefore, for the functions and the like that can be implemented by functional modules of the apparatus, reference may be made to the descriptions of the embodiments shown in FIG. 6B to FIG. 9, and the details are not repeated herein. Although the depth prediction unit 1204 is shown in FIG. 12, the depth prediction unit 1204 is not a required functional unit, which is shown with a broken line in FIG. 12.

Referring to FIG. 13, based on the same inventive concept, a computer device 130 is further provided according to an embodiment of the present disclosure. The computer device 130 may include a memory 1301 and a processor 1302.

The memory 1301 is configured to store a computer program executed by the processor 1302. The memory 1301 may mainly include a program storage area and a data storage area. The program storage area may store an operating system, an application program that is required by at least one function, and the like. The data storage area may store data created according to use of the computer device, and the like. The processor 1302 may be a central processing unit (CPU), a digital processing unit, or the like. In this embodiment of the present disclosure, a specific connection medium between the memory 1301 and the processor 1302 is not limited. In this embodiment of the present disclosure, the memory 1301 and the processor 1302 are connected to each other through a bus 1303, as shown in FIG. 13. The bus 1303 is represented by using a bold line in FIG. 13. A manner of connection between other components is only schematically shown, which is not limited thereto. The bus 1303 may include an address bus, a data bus, a control bus, or the like. For ease of representation, only one bold line is used to represent the bus in FIG. 13, but this does not mean that there is only one bus or only one type of bus.

The memory 1301 may be a volatile memory, such as a random-access memory (RAM). The memory 1301 may also be a non-volatile memory, such as a read-only memory, a flash memory, a hard disk drive (HDD), or a solid-state drive (SSD). The memory 1301 may also be any other medium that may be used for carrying or storing expected program code having an instruction or data structure form, and that may be accessed by a computer, but is not limited thereto. The memory 1301 may be a combination of the foregoing memories.

The processor 1302 is configured to invoke the computer program stored in the memory 1301 to perform the method performed by the devices in the embodiments shown from FIG. 6B to FIG. 9.

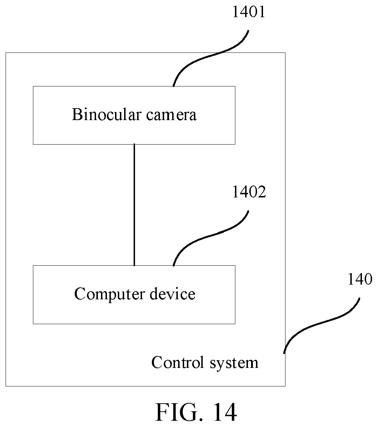

Referring to FIG. 14, based on the same inventive concept, a control system 140 is further provided according to an embodiment of the present disclosure. The control system 140 includes a binocular camera 1401 and a computer device 1402.

The binocular camera 1401 includes a left-view camera lens and a right-view camera lens. The left-view camera lens is configured to capture a left-view image, and the right-view camera lens is configured to capture a right-view image.

The computer device 1402 is configured to acquire a disparity map between the left-view image and the right-view image by performing the method shown in the embodiments of FIG. 6B to FIG. 9, predict a distance from a captured object in the left-view image and the right-view image to the binocular camera according to the disparity map, and control a controlled system according to the predicted distance.

The control system 140 may be, for example, an autonomous driving control system for controlling an autonomous vehicle, and correspondingly, the controlled system may be the autonomous vehicle. The binocular camera 1401 may be disposed on a vehicle body of the autonomous vehicle. The computer device 1402 may be disposed on the vehicle body of the autonomous vehicle. Further, the computer device 1402 may also be separated from the autonomous vehicle and is in communication connection with the autonomous vehicle. In addition to the binocular camera 1401, the autonomous vehicle may further include other functional parts that may implement the functions of the vehicle, such as the vehicle body, a vehicle transmission, a vehicle brake, and wheel devices. The control system 140 may control the parts based on the disparity map obtained by the method in the embodiments of the present disclosure, to implement the functions of the autonomous vehicle in cooperation.

The control system 140 may also be a robot control system for controlling a robot, and correspondingly, the controlled system may be the robot. The binocular camera 1401 may be disposed on the robot to move accordingly with the movement of the robot. The computer device 1402 may be disposed on the robot. The computer device 1402 may also be separated from the robot and is in communication connection with the robot. In addition to the binocular camera 1401, the robot may further include other possible parts required by the robot to work, such as a robotic arm and a moving device. The control system 140 may control the parts based on the disparity map obtained by the method in the embodiments of the present disclosure, to implement an interactive function between the robot and the object in the capturing area in cooperation.

The computer device 1402 may be, for example, the computer device as shown in FIG. 13.

In some embodiments, each aspect of the method provided in the present disclosure may be further implemented in a form of a program product including program code. When the program product is run on a computer device, the program code is used for enabling the computer device to perform steps of the method according to the various exemplary implementations of the present disclosure described above in the specification. For example, the computer device may perform the method performed by the devices in the embodiments shown from FIG. 6B to FIG. 9.

The program product may be any combination of one or more readable mediums. The readable medium may be a readable signal medium or a readable storage medium. The readable storage medium may be, for example, but is not limited to, an electric, magnetic, optical, electromagnetic, infrared, or semi-conductive system, apparatus, or component, or any combination of the above. More specific examples of the readable storage medium (a non-exhaustive list) include: an electrical connection having one or more wires, a portable disk, a hard disk, a random-access memory (RAM), a read-only memory (ROM), an erasable programmable read-only memory (EPROM or a flash memory), an optical fiber, a compact disc read-only memory (CD-ROM), an optical storage device, a magnetic storage device, or any appropriate combination thereof.

Although the exemplary embodiments of the present disclosure have been described, once persons skilled in the art learn a basic creative concept, they can make other changes and modifications to these embodiments. Therefore,

**EP 3 940 641 A1**

the following claims are intended to cover the exemplary embodiments and all changes and modifications falling within the scope of the present disclosure.

A person skilled in the art can make various modifications and variations to the present disclosure without departing from the spirit and scope of the present disclosure. In this case, if the modifications and variations made to the present disclosure fall within the scope of the claims of the present disclosure and their equivalent technologies, the present disclosure is intended to include these modifications and variations.

**Claims**

1. A disparity map acquisition method, executed by a computer device, the method comprising:

   performing feature extraction on a left-view image and a right-view image of a captured object layer by layer through M cascaded feature extraction layers, to obtain a left-view feature map set and a right-view feature map set of each layer, M being a positive integer greater than or equal to 2;
   constructing an initial disparity map based on the left-view feature map set and the right-view feature map set extracted by an $M^{th}$ feature extraction layer; and
   iteratively refining, starting from an $(M-1)^{th}$ layer, a disparity map through the left-view feature map set and the right-view feature map set extracted by each feature extraction layer in sequence until a final disparity map is obtained based on an iteratively refined disparity map of a first layer, an iteratively refined disparity map of an $i^{th}$ layer being obtained by refining, by using a residual of a matching cost when matching the left-view feature map set and the right-view feature map set extracted by the $i^{th}$ layer, a matching cost after iterative refinement of an $(i+1)^{th}$ layer, the disparity map used by the $(M-1)^{th}$ layer being the initial disparity map, and i being a positive integer greater than zero and less than M.

2. The method according to claim 1, wherein the initial disparity map comprises a left-view initial disparity map and a right-view initial disparity map, the left-view initial disparity map is obtained based on a disparity value between each pixel point in the left-view feature map set and a corresponding matched pixel point in the right-view feature map set, and the right-view initial disparity map is obtained based on a disparity value between each pixel point in the right-view feature map set and a corresponding matched pixel point in the left-view feature map set; and
   the iteratively refining, starting from an $(M-1)^{th}$ layer, a disparity map through the left-view feature map set and the right-view feature map set extracted by each feature extraction layer in sequence comprises:
   iteratively refining, starting from the $(M-1)^{th}$ layer, a left-view disparity map and a right-view disparity map respectively through the left-view feature map set and the right-view feature map set extracted by each feature extraction layer in sequence.

3. The method according to claim 1, wherein the constructing an initial disparity map based on the left-view feature map set and the right-view feature map set extracted by an $M^{th}$ feature extraction layer comprises:

   obtaining, for each pixel point in a first feature map set, a disparity value between the pixel point and a corresponding matched pixel point in a second feature map set, the first feature map set being any one of the left-view feature map set and the right-view feature map set extracted by the $M^{th}$ layer, and the second feature map set being the other one of the left-view feature map set and the right-view feature map set extracted by the $M^{th}$ layer; and
   mapping the disparity value corresponding to the pixel point to the first feature map set to obtain the initial disparity map.

4. The method according to claim 3, wherein the obtaining, for each pixel point in a first feature map set, a disparity value between the pixel point and a corresponding matched pixel point in a second feature map set comprises:

   superimposing the second feature map set to the first feature map set in a feature dimension according to each of preset disparity values in a preset disparity range, to obtain an overlapping feature map set corresponding to the preset disparity value;
   obtaining matching cost values of overlapping pixel point pairs in the overlapping feature map set, each of the overlapping pixel point pairs comprising a first pixel point in the first feature map set and a second pixel point in the first feature map set, with a disparity value between the second pixel point and the first pixel point being one of the preset disparity values, the matching cost value of the overlapping pixel point pair being negatively correlated with a similarity between the first pixel point and the second pixel point; and

16

determining a preset disparity value corresponding to an overlapping pixel point pair having a minimum matching cost value among all overlapping pixel point pairs where each pixel point in the first feature map set is located, as the disparity value between the pixel point and the corresponding matched pixel point.

5. The method according to claim 1, further comprising:

mapping a third feature map set to a fourth feature map set according to an iteratively refined disparity map of the $(i+1)^{th}$ layer, to obtain a mapped feature map set corresponding to the third feature map set, the third feature map set being any one of the left-view feature map set and the right-view feature map set extracted by the $i^{th}$ layer, and the fourth feature map set being the other one of the left-view feature map set and the right-view feature map set extracted by the $i^{th}$ layer;
superimposing the mapped feature map set and the iteratively refined disparity map of the $(i+1)^{th}$ layer to the fourth feature map set in a feature dimension, to obtain an overlapping feature map set; and
obtaining, according to the overlapping feature map set, the residual of the matching cost when matching the left-view feature map set and the right-view feature map set extracted by the $i^{th}$ layer.

6. The method according to claim 5, wherein before the mapping a third feature map set to a fourth feature map set according to an iteratively refined disparity map of the $(i+1)^{th}$ layer, to obtain a mapped feature map set corresponding to the third feature map set, the method further comprises:

upsampling an iteratively refined disparity map of the $(i+1)^{th}$ layer, to obtain an upsampled disparity map having the same resolution as the left-view feature map set and the right-view feature map set extracted by the $i^{th}$ layer; and
the mapping a third feature map set to a fourth feature map set according to an iteratively refined disparity map of the $(i+1)^{th}$ layer, to obtain a mapped feature map set corresponding to the third feature map set comprises: mapping the third feature map set to the fourth feature map set according to the upsampled disparity map, to obtain the mapped feature map set corresponding to the third feature map set.

7. The method according to claim 5, wherein the obtaining, according to the overlapping feature map set, the residual of the matching cost when matching the left-view feature map set and the right-view feature map set extracted by the $i^{th}$ layer comprises:

obtaining an attention feature map set through an attention mechanism and the overlapping feature map set; and
obtaining, according to the attention feature map set, the residual of the matching cost when matching the left-view feature map set and the right-view feature map set extracted by the $i^{th}$ layer.

8. The method according to any one of claims 1 to 7, wherein after the iteratively refining, starting from an $(M-1)^{th}$ layer, a disparity map through the left-view feature map set and the right-view feature map set extracted by each feature extraction layer in sequence until a final disparity map is obtained based on an iteratively refined disparity map of a first layer, the method further comprises:
obtaining a depth map based on the final disparity map, a distance between camera lenses that respectively capture the left-view image and the right-view image, and focal lengths of the cameras lenses, the depth map being used for indicating distances from the captured object to the camera lenses.

9. A disparity map acquisition apparatus, comprising:

a feature extraction unit, configured to perform feature extraction on a left-view image and a right-view image of a captured object layer by layer through M cascaded feature extraction layers, to obtain a left-view feature map set and a right-view feature map set of each layer, M being a positive integer greater than or equal to 2;
an initial disparity map construction unit, configured to construct an initial disparity map based on the left-view feature map set and the right-view feature map set extracted by an $M^{th}$ feature extraction layer; and
a disparity map refinement unit, configured to: iteratively refine, starting from the $(M-1)^{th}$ layer, a disparity map through the left-view feature map set and the right-view feature map set extracted by each feature extraction layer in sequence until a final disparity map is obtained based on an iteratively refined disparity map of a first layer, an iteratively refined disparity map of an $i^{th}$ layer being obtained by refining, by using a residual of a matching cost when matching the left-view feature map set and the right-view feature map set extracted by the $i^{th}$ layer, a matching cost after iterative refinement of an $(i+1)^{th}$ layer, the disparity map used by the $(M-1)^{th}$ layer being the initial disparity map, and i being a positive integer greater than zero and less than M.

**10.** The apparatus according to claim 9, wherein the initial disparity map construction unit is configured to:

for each pixel point in a first feature map set, obtain a disparity value between the pixel point and a corresponding matched pixel point in a second feature map set, the first feature map set being any one of the left-view feature map set and the right-view feature map set extracted by the $M^{th}$ layer, and the second feature map set being the other one of the left-view feature map set and the right-view feature map set extracted by the $M^{th}$ layer; and map the disparity value corresponding to the pixel point to the first feature map set to obtain the initial disparity map.

**11.** The apparatus according to claim 10, wherein the initial disparity map construction unit is configured to:

superimpose the second feature map set to the first feature map set in a feature dimension according to each of preset disparity values in a preset disparity range, to obtain an overlapping feature map set corresponding to the preset disparity value;
obtain matching cost values of overlapping pixel point pairs in the overlapping feature map set, each of the overlapping pixel point pairs comprising a first pixel point in the first feature map set, and a second pixel point in the first feature map set, with a disparity value between the second pixel point and the first pixel point being one of the preset disparity values, the matching cost value of the overlapping pixel point pair being negatively correlated with a similarity between the first pixel point and the second pixel point; and
determine a preset disparity value corresponding to an overlapping pixel point pair having a minimum matching cost value among all overlapping pixel point pairs where each pixel point in the first feature map set is located, as the disparity value between the pixel point and the corresponding matched pixel point.

**12.** The apparatus according to claim 9, wherein the disparity map refinement unit is configured to:

map a third feature map set to a fourth feature map set according to an iteratively refined disparity map of the $(i+1)^{th}$ layer, to obtain a mapped feature map set corresponding to the third feature map set, the third feature map set being any one of the left-view feature map set and the right-view feature map set extracted by the $i^{th}$ layer, and the fourth feature map set being the other one of the left-view feature map set and the right-view feature map set extracted by the $i^{th}$ layer;
superimpose the mapped feature map set and the iteratively refined disparity map of the $(i+1)^{th}$ layer to the fourth feature map set in a feature dimension, to obtain an overlapping feature map set; and
obtain, according to the overlapping feature map set, the residual of the matching cost when matching the left-view feature map set and the right-view feature map set extracted by the $i^{th}$ layer.

**13.** A computer device, comprising a memory, a processor, and a computer program stored on the memory and executable by the processor,
the processor being configured to execute the computer program to implement operations of the method according to any one of claims 1 to 8.

**14.** A control system, comprising:

a binocular camera comprising a left-view camera lens and a right-view camera lens, the left-view camera lens being configured to capture a left-view image, and the right-view camera lens being configured to capture a right-view image; and
a computer device configured to: acquire a disparity map between the left-view image and the right-view image by performing the method according to any one of claims 1 to 8, predict a distance from a captured object in the left-view image and the right-view image to the binocular camera according to the disparity map, and control a controlled system according to the predicted distance.

**15.** The control system according to claim 14, wherein the control system comprises: an autonomous driving control system for controlling an autonomous vehicle or a robot control system for controlling a robot.

**16.** A computer readable storage medium, having computer instructions stored thereon, the computer instructions, when run on a computer device, causing the computer device to perform operations of the method according to any one of claims 1 to 8.

| 1 | 2 | 3 | 4 |
|---|---|---|---|
| 5 | 6 | 7 | 8 |
| 9 | 10 | 11 | 12 |
| 13 | 14 | 15 | 16 |

A

| 1 | 2 | 3 | 4 |
|---|---|---|---|
| 5 | 6 | 7 | 8 |
| 9 | 10 | 11 | 12 |
| 13 | 14 | 15 | 16 |

B

FIG. 1

FIG. 2

FIG. 3

FIG. 4

FIG. 5

FIG. 6A

Perform feature extraction on a left-view image and a right-view image of a photographed object layer by layer through M cascaded feature extraction layers, to obtain a left-view feature map set and a right-view feature map set of each layer — 601

Construct an initial disparity map based on the left-view feature map set and the right-view feature map set extracted by an $M^{th}$ feature extraction layer — 602

Iteratively refine, starting from an $(M-1)^{th}$ layer, a disparity map through the left-view feature map set and the right-view feature map set extracted by each feature extraction layer in sequence until a final disparity map is obtained based on an iteratively refined disparity map of a first layer — 603

Obtain a depth map based on the final disparity map, a distance between cameras that respectively capture the left-view image and the right-view image and focal lengths of the cameras — 604

FIG. 6B

FIG. 7

FIG. 8

FIG. 9

Left-view image

Right-view image

Disparity map

FIG. 10

a

b

c

d

e

f

FIG. 11

1201                                          1202

Feature extraction unit          Initial disparity map
                                 construction unit

Disparity map refinement         Depth prediction unit
unit

                                              120

1203                             1204         Disparity map
                                              acquisition apparatus

FIG. 12

1301

Memory

                                 1303

130

                                 Processor

Computer device

1302

FIG. 13

1401

Binocular camera

1402

Computer device

140

Control system

FIG. 14

## INTERNATIONAL SEARCH REPORT

| International application No. |
| --- |
| **PCT/CN2020/078564** |

| A. | CLASSIFICATION OF SUBJECT MATTER |
| --- | --- |

G06T 7/55(2017.01)i

According to International Patent Classification (IPC) or to both national classification and IPC

| B. | FIELDS SEARCHED |
| --- | --- |

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 视差, 视差图, 特征, 左目, 右目, 双目, 迭代, 叠代, 匹配, 映射, 残差, 深度, parallax, parallax chart, parallax map, feature, characteristic, left eye, right eye, binocular, iteration, match, residual, depth

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 109919993 A (TENCENT TECHNOLOGY SHENZHEN CO., LTD.) 21 June 2019 (2019-06-21) <br> claims 1-15, and description, paragraphs [0018]-[0019] | 1-16 |
| X | CN 108537837 A (TENCENT TECHNOLOGY SHENZHEN CO., LTD.) 14 September 2018 (2018-09-14) <br> claims 1-15, and description, paragraphs [0039]-[0040], [0059], [0131] and [0208] | 1-3, 8-10, 13-16 |
| A | CN 108681753 A (WUHAN IN-DRIVING TECHNOLOGY CO., LTD.) 19 October 2018 (2018-10-19) <br> entire document | 1-16 |
| A | CN 108986136 A (NANCHANG HANGKONG UNIVERSITY) 11 December 2018 (2018-12-11) <br> entire document | 1-16 |
| A | CN 106355570 A (KUNMING UNIVERSITY OF SCIENCE AND TECHNOLOGY) 25 January 2017 (2017-01-25) <br> entire document | 1-16 |
| A | EP 3070671 A1 (POLITECHNIKA POZNANSKA) 21 September 2016 (2016-09-21) <br> entire document | 1-16 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 May 2020** | **05 June 2020** |

| Name and mailing address of the ISA/CN | Authorized officer |
| --- | --- |
| **China National Intellectual Property Administration** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2020/078564** |

**C.    DOCUMENTS CONSIDERED TO BE RELEVANT**

| Category* | Citation of document, with indication, where appropriate, of the relevant passages | Relevant to claim No. |
|---|---|---|
| A | US 2016150210 A1 (SAMSUNG ELECTRONICS CO., LTD.) 26 May 2016 (2016-05-26) entire document | 1-16 |

Form PCT/ISA/210 (second sheet) (January 2015)

**INTERNATIONAL SEARCH REPORT**
Information on patent family members

International application No.

**PCT/CN2020/078564**

| Patent document cited in search report | | | Publication date (day/month/year) | Patent family member(s) | | | Publication date (day/month/year) |
|---|---|---|---|---|---|---|---|
| CN | 109919993 | A | 21 June 2019 | None | | | |
| CN | 108537837 | A | 14 September 2018 | WO | 2019192290 | A1 | 10 October 2019 |
| CN | 108681753 | A | 19 October 2018 | None | | | |
| CN | 108986136 | A | 11 December 2018 | None | | | |
| CN | 106355570 | A | 25 January 2017 | None | | | |
| EP | 3070671 | A1 | 21 September 2016 | PL | 411631 | A1 | 26 September 2016 |
| | | | | US | 2016275691 | A1 | 22 September 2016 |
| US | 2016150210 | A1 | 26 May 2016 | KR | 20160060358 | A | 30 May 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201910186202